# EUROPEAN PATENT APPLICATION

(11) **EP 2 746 967 A2**
(43) Date of publication of application: **25.06.2014**
(21) Application number: 13197218.4
(22) Date of filing: 13.12.2013
(51) Int. Cl.: G06F 17/30

(54) **A method and a tool for configuring an object**

(30) Priority: 18.12.2012 US 201261738755 P
(71) Applicant: Sitecore A/S, 1606 Copenhagen V (DK)
(72) Inventor: Seifert, Michael, DK-1606 København V (DK); Sorensen, Mikkel Høy, 4100 Ringsted (DK)
(74) Representative: Inspicos A/S

(57) **Abstract**

A method for configuring an object to be injected into one or more webpages of a website, in which a remote server obtains information required in order to configure the object, and provides the information to a content management system (CMS). The object is configured, based on the obtained information. No additional program code is required at the CMS because the process is controlled by the remote server.

## Description

### FIELD OF THE INVENTION

The present invention relates to a method and a tool for configuring an object to be injected into one or more webpages of a website. The object is of a kind which requires relevant configuration in order to operate correctly when injected into a webpage. The object may, e.g., be in the form of a tag.

### BACKGROUND OF THE INVENTION

It is sometimes desirable to provide websites with objects, e.g. from third parties. The objects may not be visible to a visitor of the website, but may cause background events to occur when a visitor visits the website. Furthermore, some objects may be of a kind which requires relevant configuration, e.g. setting of one or more variables, in order to be able to operate in a correct manner when inserted into a webpage which is presented to a visitor. The configuration of an object may, e.g., be based on input and/or the configuration may be defined by various conditions and/or pre-configurations. An example of such an object is an object which initiates generation of a heat map click analysis for a webpage. When objects of this kind are desired on a webpage, the website manager must configure the object before it is injected into the webpage. This can, e.g., be done directly via a content management system (CMS). However, this requires a substantial amount of code to be installed at the CMS server, and it is necessary to perform maintenance and updates on the installed code, at the CMS.

US 2010/0095197 discloses a system and a method for dynamic content publishing. The system may perform a publish process for a tag-enriched webpage comprising querying a content repository for a set of structured dynamic content information defined by a metadata data structure, populating the metadata-enriched webpage with the results of the publish process query, and storing the updated webpage at a web server. A web development server, including a web content management system (WCMS), allows developers to design webpages that integrate the dynamic information from one or more content repositories.

### DESCRIPTION OF THE INVENTION

It is an object of embodiments of the invention to provide a method for configuring an object to be injected into a webpage of a website, the method allowing the object to be configured without requiring specific code relating to the specific object, or to configuration of the object, to be installed at a CMS server.

It is a further object of embodiments of the invention to provide a method for configuring an object to be injected into a webpage of a website, the method allowing the object to be configured in an easy manner.

It is an even further object of embodiments of the invention to provide a tool for configuring an object to be injected into a webpage of a website, the tool allowing the object to be configured without requiring code to be installed at a CMS server.

It is an even further object of embodiments of the invention to provide a tool for configuring an object to be injected into a webpage of a website, the tool allowing the object to be configured in an easy manner.

According to a first aspect the invention provides a method for configuring an object to be injected into one or more webpages of a website, said one or more objects each comprising one or more configurable variables, the method comprising the steps of:
- a website manager accessing a content management system (CMS), said CMS residing on a CMS server, via a client device,
- the website manager requesting an object to be injected into one or more webpages of the website, thereby initiating a configuring process,
- in response to said request, the CMS causing the client device to contact a remote server,
- the remote server obtaining information, regarding the configurable variable(s), required in order to configure the object,
- the remote server providing said information to the CMS, and
- configuring the object, using the obtained information, and storing the object and/or the configured variable(s) at a storage device which is accessible to the CMS.

In the present context the term 'website' should be interpreted to mean a collection of related webpages, images, videos or other digital assets being addressed relative to a common Uniform Resource Locator (URL). The webpages of the website may advantageously be designed, presented and linked together to form a logical information resource and/or transaction initiation function.

The method according to the first aspect of the invention relates to configuring an object to be injected into one or more webpages. The object is of a kind which requires input from a user or from other sources in order to be able to operate correctly at a given webpage and under given circumstances. It could, e.g., be in the form of a tag or the like being injected into a webpage according to specific criteria and/or rules, and delivered along with the webpage to a visitor of the website, when the webpage is requested by the visitor.

Thus, the object comprises one or more configurable variables, which need to be set or configured in order to configure the object correctly. The variable(s) may be any conceivable variation of the object, including, but not limited to, parameters which must be set.

The object may be interactive in the sense that it may cause actions to be performed via a browser of a visitor when the object is provided to a visitor along with the webpage. For instance, the object may be a heat map which causes a heat map analysis to be performed as visitors click their way through the website. In this case, it is necessary to enable a heat map at a heat map vendor, identify a target group of visitors to receive the heat map, specify a maximum number of clicks to be recorded, etc. One or more of these configurations must go into the configuration of the object to be inserted into the webpage.

Another example may be ads to be displayed on one or more webpages.

According to the method of the first aspect of the invention, a website manager initially accesses a content management system (CMS), residing on a CMS server. This is done via a client device.

In the present context the term 'content management system', or 'CMS', should be interpreted to mean a system, which allows a website manager or editor to create and edit content of a website.

In the present context the term 'server' should be interpreted to mean a device which is typically accessible via a data network, such as the Internet or a Local Area Network (LAN). It should be noted that, in the present context, the term 'server' should be interpreted to cover a single device as well as two or more individual devices being interlinked in such a manner that they, to a website manager accessing the CMS, seem to act as a single device.

The client device could be any suitable device being operated by the website manager, and allowing the website manager to access the CMS. Thus, the client device could be a personal computer (PC), a cell phone, a tablet, a TV, or any other suitable kind of client device.

Once the website manager has accessed the CMS, he or she requests an object to be injected into one or more webpages of the website. Thus, the website manager decides that he or she wants a specific kind of object to be injected into one or more specific webpages. This step may, e.g., be performed by the website manager activating or clicking a button or a link at the CMS. Since the object is of a kind which requires configuration in order to operate correctly, as described above, a configuration process is thereby initiated.

In response to the request from the website manager, the CMS causes the client device to contact a remote server. This may, e.g., be done by the CMS redirecting the client device to the remote server. As an alternative, the CMS may simply instruct the client device to open a URL on the remote server.

In the present context the term 'remote server' should be interpreted to mean a server which is separate from the CMS server. The remote server will typically be located on the Internet.

Upon being contacted by the client server, the remote server obtains information, regarding the configurable variable(s), required in order to configure the object. Thus, given which kind of object the website manager wishes to be injected into a webpage, the remote server 'knows' which kind of information is required in order to configure the object correctly, i.e. in such a manner that the object operates in a correct manner when it is provided to a visitor along with a webpage requested by the visitor. Accordingly, the remote server ensures that this information is obtained, thereby ensuring that the object can be correctly configured. The information may be obtained from various sources and in various ways. For instance, some information may be obtained from yet another server, e.g. a server providing a third party service, some information may be provided by the CMS, and/or some information may be requested, e.g. in the form of input, from the website manager. This will be described further below. The obtained information may, e.g., include parameter settings, definition of target group(s), third party service ID obtained from a vendor, categorizing, naming, providing account or password details, etc. Alternatively or additionally, the step of the remote server obtaining information may comprise the remote server selecting a preconfigured object from a plurality of available preconfigured objects.

According to one embodiment, the CMS may generate an object ID or an object handle in response to the website manager requesting an object to be injected into a webpage. This object ID or handle may be provided to the client device, possibly along with additional information from the CMS, and then carried along the entire process. Thereby the information obtained by the remote server is associated to the object ID or handle, and may eventually be returned to the CMS along with the information obtained by the remote server.

It is an advantage that the remote server handles the step of obtaining information, since it is thereby only necessary to install program code required in order to control this step at the remote server, i.e. no specialized program code is required at the CMS server for particular objects. This makes it easy to install, maintain and update the required program code, since it can be done centrally, and no effort is required from the website manager in order to ensure that the most recent version of the required program code is available to properly insert and manage objects. Additionally, new objects can be introduced without adding any program code.

Furthermore, since the client device is automatically and seamlessly caused to contact the remote server, the website manager will normally not notice that he or she is communicating with the remote server, rather than with the CMS.

When the information has been obtained, the remote server provides the obtained information to the CMS. The information may be communicated directly to the CMS, or it may be provided via the client device. This will be described further below. The provided information may be the information as obtained by the remote server, e.g. in the form of parameter values or the like. As an alternative, the remote server may provide a complete object which is configured, or partly configured, in accordance with the obtained information, or the remote server may provide the information in the form of configured variable(s). This will be described further below.

Finally, the object is configured, using the obtained information, and the object and/or the configured variable(s) is/are stored at a storage device which is accessible to the CMS. Thereby the CMS can gain access to the configured object and/or the configured variable(s) in order to provide a configured object along with a webpage to a visitor requesting the webpage at a later point in time. The storage device may, e.g., form part of the CMS server. As an alternative, the storage device may be arranged remotely relative to the CMS server, as long as it is accessible to the CMS.

Thus, according to the method of the first aspect of the invention, an object to be injected into a webpage of a website is suitably configured. The process is controlled by a remote server, thereby eliminating the need for installing additional program code at the CMS server. Furthermore, the website manager is guided through the process in such a manner that he or she will not notice that the process is controlled by the remote server, rather than at the CMS, and the website manager only has to actively access the CMS. Thus, it is easy for the website manager to ensure that the object is correctly configured.

The step of configuring the object may be performed at the CMS. In this case, the step of the remote server providing information to the CMS is performed prior to the step of configuring the object, since the CMS will need the obtained information in order to be able to perform the configuring step. Furthermore, the information provided by the remote server to the CMS may advantageously be the information as obtained by the remote server and/or configured variable(s).

As an alternative, the step of configuring the object may be performed at the remote server. In this case, the step of configuring the object may be performed prior to the step of the remote server providing information to the CMS, and the information provided may be in the form of the configured object.

As another alternative, the step of configuring the object may be performed partly at the CMS and partly at the remote server. In this case, the remote server may provide a partly configured object to the CMS, and some further information may be required in order to complete the configuration of the object. This further information may be provided by the CMS or obtained, e.g. in the form of input, from the website manager. This will be described further below.

The remote server may be a service provider arranged to manage objects to be injected into webpages on behalf of a website manager. According to this embodiment, the remote server may be a so-called tag management service, or it may form part of a system for managing third party objects on a website.

The method may, in this case, further comprise the step of the remote server contacting a third party service in order to obtain at least part of the information required in order to configure the object. According to this embodiment, in the case that the remote server discovers that some of the required information must be provided by a given third party service provider, the remote server simply contacts the relevant third party service provider and obtains the required information directly therefrom. The third party service provider may, e.g., be a provider which provides a service to be performed when a visitor receives a webpage into which the object has been injected. For instance, the third party service provider may be a heat map vendor, an analytics service, etc. To this end it may be necessary to create, define or enable a service at a server of the third party service provider in order to be able to configure the object correctly. Upon being contacted by the remote server, the third party service provider may create, define or enable a relevant service, and return appropriate information, e.g. including a service ID, to the remote server. The remote server may then include the service ID in the information to be provided to the CMS, and/or the service ID may be included in the object as a part of the configuration of the object. When the configured object is subsequently injected into a webpage which is provided to a visitor of the website, the third party service provider may be contacted by the browser of the visitor, and the third party service provider may then perform the required service in accordance with configured information, including the service ID, and the service which was created, defined or enabled at the server of the third party service provider. The service ID may, e.g., be a unique identifier of a heat map.

Alternatively or additionally, the method may further comprise the step of the remote server causing the client device to contact a third party service in order to allow the client device to obtain at least part of the information required in order to configure the object directly from the third party service. According to this embodiment, the client device contacts the third party service directly and obtains the required information directly from the third party service provider. The remarks set forth above are, however, equally applicable here.

As an alternative, the remote server may be a third party web service. According to this embodiment, the CMS causes the client device to contact the third party web service directly, and the third party web service controls the process of obtaining the required information.

The method may further comprise the steps of:
- the CMS requesting further information required in order to configure the object from the website manager, and
- the website manager providing said further information to the CMS, via the client device.

According to this embodiment, some of the information required in order to configure the object must be provided by the website manager. Accordingly, the CMS is prompted to request this information from the website manager, and presenting the website manager with a form or the like, allowing the website manager to provide the required information via the client device, e.g. by typing in the information or selecting one of a number of possible options, e.g. by means of a mouse click.

The further information provided by the website manager may, e.g., include defining a visitor segment to whom the object should be presented. The visitor segment could, e.g., be defined by means of demographic parameters, such as gender, age, etc., by means of preferences, such as political points of view, interests, etc., by means of geographical parameters, etc. Alternatively or additionally, the visitor segment could be defined by means of visitor behaviour parameters, e.g. only first time visitors or only visitors who have identified themselves, e.g. by logging in, etc. Alternatively or additionally, other visitor segments could be envisaged.

Alternatively or additionally, the further information provided by the website manager may include visual characteristics of the object, such as colour, size, font size, etc. Or the further information could include time period in which the object should be presented to visitors, or setting of other suitable parameters.

The method may further comprise the step of the CMS dynamically generating a webpage, including injecting one or more objects into the webpage upon request for said webpage by a visitor visiting the website. According to this embodiment, when an object has been configured in the manner described above, it is made available to the CMS. When a visitor visiting the website requests the webpage, the CMS dynamically generates a webpage matching the request of the visitor. If it is determined that the webpage should include one or more configured objects, and possibly that the visitor belongs to the target group(s), this includes injecting appropriate object(s) into the webpage. Thereby the webpage which is generated and supplied to the visitor includes the object(s).

Thus, according to this embodiment of the invention, a webpage is provided to the visitor, which structurally differs from prior art webpages, in that it includes objects which have been configured in accordance with a method according to the invention. Furthermore, the invention allows the website manager to provide such a webpage in an easy manner, and without requiring the specific code is installed at the CMS server, as described above.

The object may contain instructions to a browser to contact a third party web service, and the method may thus further comprise the step of the browser of the visitor contacting said third party web service in response to receiving the dynamically generated webpage. According to this embodiment, when the visitor accesses the requested webpage, via a browser, the browser also receives instructions to contact a given third party web service. The browser of the visitor then contacts the third party web service. The third party web service may provide additional information or functionality to the browser of the visitor, thereby affecting the content being presented to the visitor. Alternatively or additionally, the third party web service may retrieve information from the browser of the visitor, e.g. for analysis purposes. For instance, the third party web service may be a service provider performing web statistics, and/or a heat map vendor.

Thus, the method may further comprise the step of the third party web service performing functionality in response to being contacted by the browser of the visitor. The functionality may, e.g., be or comprise collecting information regarding the visitor and/or the visit. Alternatively or additionally, the functionality may be or comprise BI analytics, banner ads, PPC or PPA ads, bid management, visitor detection, device detection, location services, SSO management, behavioural tracking and analysis, content recommendation, heat maps, social media integration, tag management, etc.

Thus, the third party web service may be adapted to collect and analyse information about the visitor during a visit to the website. In this case the third party web service may, e.g., be an analysing agent such as Google^{®} Analytics, Google^{®} AdWords, Omniture, WebTrends etc. Alternatively, the third party web service may be PPV or PPC Advertising, Affiliate Marketing, Ad Personalization, BI Visualization, Heatmap Click Analysis, Mouse Move Analysis, Mouse Scroll Analysis, Web Form Analysis, Goal Conversion Analysis, Phone Call Tracking Analysis, Bid Management, Link Analysis, Customer Engagement Analysis, Customer Experience Analysis, Phone Call Tracking, A/B/n Multivariate Testing, Social Media Analysis, Behavioural Targeting, Retargeting, Search Retargeting, Pretargeting, User Behaviour Testing, Website Optimization, Website Personalization, Shopping Cart Abandonment Analysis, App Marketing Analysis, Customer Survey and Website Performance Monitoring such as Targit, Tableau, Baynote, Crazyegg, ClickTale, ClickDensity, TradeDoubler, Monetate, Optimizely, VisualRevenue, Encima Group, Causata, OpinionLab, Pointmarc, MediaPlex, IgnitionOne, WebGains, Maxymiser, Semphonic, AffiliateWindow, Ecapacity, CrossPixel Media, LinkShare, BitBang, SaleCycle, Acquisio, Certona, ResponseTap, NetMining, Localytics, myThings, Criteo, Chango, BlueKai, SociaGram, Merchenta, ThinkRealTime, MarinSoftware, Kenshoo, BuySight, ForSee, Modea, SiteScout, etc.

The step of the remote server obtaining information may be performed by means of a wizard or steps of a wizard. According to this embodiment, a wizard is opened in response to the website manager requesting an object to be injected into a webpage. Via the wizard, the remote server ensures that it obtains the information required in order to configure the object correctly. The wizard is managed by the remote server, and is presented to the website manager via the client device.

The step of the remote server providing information to the CMS may comprise the steps of:
- the remote server providing said information to the client device, and
- the client device subsequently providing said information to the CMS.

According to this embodiment, the remote server provides the information to the CMS via the client device. The entire configuring process may even be carried out without any direct communication between the CMS and the remote server.

In this case the method may further comprise the step of the remote server redirecting the client device to the CMS, when the remote server has obtained the information, and the step of the client device providing said information to the CMS may be performed in response to said redirection. According to this embodiment, when the remote server has completed the step of obtaining information, it ensures that the client device is returned to the CMS in order to complete the configuration of the object, or in order to store a completely configured object received from the remote server. The client device then returns the obtained information, and possibly an initially generated object ID, to the CMS.

As an alternative, the remote server may provide the obtained information directly to the CMS. According to this embodiment, a direct communication channel between the remote server and the CMS is required.

The method may further comprise the step of the CMS providing information to the client device or to the remote server, in response to the website manager requesting an object, and the step of the remote server obtaining information may be performed on the basis of the information provided by the CMS. The information provided by the CMS may, e.g., include an object ID as described above. It may also include information regarding the kind of object to be injected, for instance information that the object is a heat map.

According to a second aspect the invention provides a tool for configuring one or more objects to be injected into one or more webpages of a website, said one or more objects each comprising one or more configurable variables, the tool comprising:
- a content management system (CMS) residing on a CMS server,
- a user interface allowing a website manager to access the CMS, via a client device, in order to request an object to be injected into one or more webpages of the website, and in order to allow the client device to provide information to the CMS,
- a communication channel allowing the client device to communicate with a remote server in order to obtain information regarding the configurable variable(s), said information being required in order to configure the object, thereby allowing the object to be configured, using the obtained information, and
- a storage device which is accessible to the CMS, for storing objects and/or configured variable(s).

It should be noted that a person skilled in the art would readily recognise that any feature described in combination with the first aspect of the invention could also be combined with the second aspect of the invention, and vice versa. Thus, the tool according to the second aspect of the invention could advantageously be used for performing the method according to the first aspect of the invention, and the remarks set forth above with reference to the first aspect of the invention are therefore equally applicable here.

For instance, the tool according to the second aspect of the invention may be used for generating webpages which include objects, which have been configured in accordance with the method according to the first aspect of the invention, and for providing such webpages to visitors.

The remote server may be a service provider arranged to manage objects to be injected into webpages on behalf of a website manager. This has already been described above. As an alternative, the remote server may be a third party web service. This has also been described above.

### BRIEF DESCRIPTION OF THE DRAWINGS

The invention will now be described in further detail with reference to the accompanying drawings in which
Fig. 1 is a block diagram illustrating a tool according to a first embodiment of the invention,
Fig. 2 is a block diagram illustrating a tool according to a second embodiment of the invention,
Fig. 3 is a block diagram illustrating a system for managing a website, using a method according to an embodiment of the invention,
Fig. 4 is a flow diagram illustrating a method according to an embodiment of the invention, and
Fig. 5 is a diagram illustrating flow of information during performance of a method according to an embodiment of the invention.

### DETAILED DESCRIPTION OF THE DRAWINGS

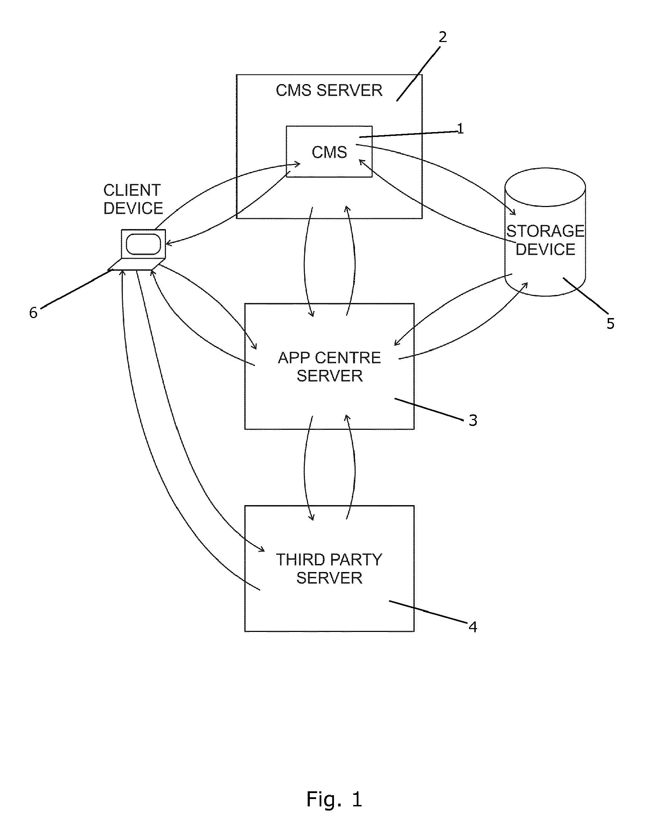

Fig. 1 is a block diagram illustrating a tool according to a first embodiment of the invention. The tool comprises a content management system (CMS) 1 residing on a CMS server 2, an app centre server 3, a third party server 4, and a storage device 5. The app centre server 3 may, e.g., be a server belonging to a service provider arranged to manage objects to be injected into webpages on behalf of a website manager. It should be noted, that even though the CMS server 2, the app centre server 3 and the third party server 4 are each shown as a single server device, each of them could, alternatively, include two or more devices, which may be located adjacent to each other or remote from each other, e.g. at different locations. The tool may be operated in the following manner.

A website manager accesses the CMS 1, via a client device 6, e.g. via a browser residing on the client device 6. In Fig. 1 the client device 6 is illustrated as a personal computer (PC), but it should be noted that the client device 6 could alternatively be a cell phone, a tablet, a TV, or any other suitable kind of client device allowing the website manager to access the CMS 1. The app centre server 3 may, e.g., belong to a service provider who manages objects, such as tags, being injected into webpages of the website, on behalf of the website manager.

Upon accessing the CMS 1 the website owner requests an object to be injected into a webpage of a website being managed by the website manager via the CMS 1. For instance, the website manager may request that a heat map should be injected into a given webpage of the website. This can simply be done by clicking or activating a button or a link via the browser. The object is of a kind which comprises one or more configurable variables. Accordingly, specific information relating to the configurable variable(s) is required in order to configure the object in a correct manner.

In response to the website manager requesting an object to be injected into the webpage, the CMS 1 causes the client device 6 to contact the app centre server 3. This may, e.g., be done by the CMS 1 redirecting the client device 6 to the app centre server 3, or by the CMS 1 instructing the client device 6 to open a URL on the app centre server 3. The CMS 1 may further provide an object ID, e.g. in the form of an object handle, and information regarding which information is required in order to configure the requested object, to the client device 6. This is performed automatically and seamlessly, i.e. the website manager will not notice that the client device contacts the app centre server 3.

When the app centre server 3 is contacted by the client device 6, it receives information regarding which kind of object the website manager has requested. In the case that the CMS 1 has provided an object ID, this may also be provided to the app centre server 3. As an alternative, the URL being opened could simply identify which kind of object has been requested. In any event, the app centre server 3 is thereby brought into a position where it is capable of obtaining information which is required in order to configure the object in a correct manner, i.e. the app centre server 3 'knows' which kind of information to seek because it knows which kind of object was requested. In addition to the information regarding which kind of object the website manager has requested, the CMS 1 may pass some kind of 'user ID' to the app centre server 3. The 'user ID' may, e.g., be or include account ID, password, user name, host site URL, etc. Thereby the app centre server 3 receives information regarding who the customer, i.e. the website owner, is, and thereby on whose behalf the object is requested.

Accordingly, the app centre server 3 starts a process of obtaining the required information, in particular information regarding the configurable variable(s) of the object. To this end the app centre server 3 may contact the third party server 4, if the third party server 4 possesses relevant information. The third party server 4 may, e.g., belong to a service provider providing a service which is related to the requested object. For instance, in the case that the requested object is a heat map, the third party server 4 may belong to a heat map vendor which is supposed to perform the desired heat map data gathering and analysis.

In response to being contacted, the third party server 4 returns the requested information to the app centre server 3. The requested information may, e.g., include a third party service ID. For instance, in the case that the object is a heat map and the third party service 4 belongs to a heat map vendor, the third party server 4 may create a heat map, on behalf of the website manager, in response to being contacted by the app centre server 3. The created heat map may be provided with a heat map ID, which is returned to the app centre server 3 (or to the client device 6), in order to identify the correct heat map when the object is later injected into a webpage which is provided to a visitor. As an alternative to providing the information described above to the app centre server 3, the third party server 4 may provide the requested information directly to the client device 6.

As an alternative to the app centre server 3 contacting the third party server 4, the app centre server 3 may cause the client device 6 to contact the third party server 4 directly, in order to obtain the required information from the third party server 4. This may, e.g., be relevant in the case that the third party server 4 requires a client certified key in order to initiate a specific service and/or to provide specific information. In this case it is necessary that it is the client device 6, and not the app centre server 3, which contacts the third party server 4. In this case the third party server 4 will in most cases provide the requested information directly to the client device 6. However, it could also be envisages that the third party server 4 provides the requested information to the app centre server 3.

When the app centre server 3 has obtained all the information required in order to configure the object, or at least the part of the required information which the app centre server 3 is capable of obtaining, it provides the obtained information to the CMS 1. The app centre server 3 may provide the information directly to the CMS 1. Alternatively, the app centre server 3 may provide the information to the client server 6, which in turn provides the information to the CMS 1. In this case there is no direct communication between the CMS 1 and the app centre server 3, but all communication between the CMS 1 and the app centre server 3 takes place via the client server 6.

The information provided to the CMS 1 may be in the form of variable parameters, in the form of configured variables or in the form of a completely configured object. In the case that the information is in the form of variable parameters or in the form of configured variables, the information enables the CMS 1 to configure the object. In this case the object is configured at the CMS 1. On the other hand, in the case that the information provided to the CMS 1 is in the form of a completely configured object, the object is configured at the app centre server 3 and subsequently supplied to the CMS 1.

In the case that an object handle was originally generated by the CMS 1, the object handle and a collection of variables, containing information in the form of configured variable(s) or variable parameters, may be returned to the CMS 1 in this step.

The object may be of a kind which requires input from the website manager in order to be configured correctly. Such input may, e.g., include a definition of the target group of visitors to receive the object, size and dimensions of the object, colours of the object, position of the object at the webpage, functionality of the object, etc. In this case, the CMS 1 requests the input from the website manager, and the website manager provides the input, via the client device 6. This may take place upon receipt of the information from the app centre server 3, before the CMS 1 causes the client device 6 to contact the app centre server 3, or simultaneously with the app centre server 3 obtaining the information.

When the information has been received at the CMS 1 and the object has been configured correctly, the configured object and/or the configured variable(s) of the object is/are stored at the storage device 5. This may be done by the app centre server 3 or by the CMS 1. In any event, the storage device 5 is accessible to the CMS 1. Thereby the CMS 1 is able to retrieve the configured object or the configured variable(s) at a later point in time, when the webpage is requested by a visitor visiting the website. Accordingly, the configured object can be injected into the webpage when it is dynamically generated, by the CMS 1, and provided to the visitor. The storage device 5 may be arranged on or form part of the CMS server 2. Alternatively, it may be a separate device, which is accessible to the CMS 1, e.g. via a wired or wireless network, or another suitable communication channel.

The entire process described above is controlled by the app centre server 3 in the sense that the app centre server 3 ensures that the required information is obtained and provided to the CMS, regardless of where the information is to be found and which entities are to provide the information. This is an advantage, because it allows the process to be performed without having to install any additional program code on the CMS server 2. Furthermore, the process is performed seamlessly in the sense that the website manager will not notice that the client device 6 is contacting other servers. He or she will only experience one flow of dialogue, following an initial contact to the CMS 1 via the client device 6.

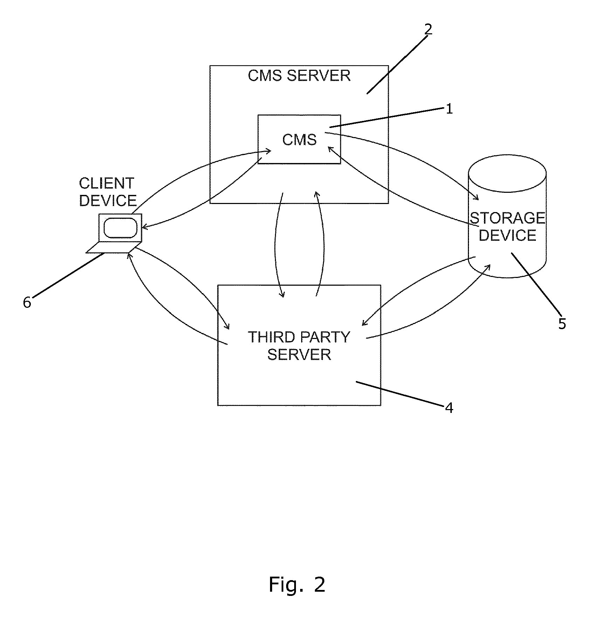

Fig. 2 is a block diagram illustrating a tool according to a second embodiment of the invention. The embodiment illustrated in Fig. 2 is very similar to the embodiment illustrated in Fig. 1, and it will therefore not be described in detail here.

The tool of Fig. 2 comprises a content management system (CMS) 1 residing on a CMS server 2, a third party server 4, and a storage device 5. Thus, according to this embodiment no app centre server is present. A website manager can access the tool via a client device 6.

When the website manager accesses the CMS 1 and requests an object to be injected into a webpage of the website, the CMS 1 causes the client device 6 to contact the third party server 4. The third party server 4 then obtains information required in order to configure the object in a correct manner, similarly to the steps performed by the app centre server in the embodiment of Fig. 1. Accordingly, in the embodiment of Fig. 2, the process is controlled by the third party server 4. Apart from that, the remarks set forth above with reference to Fig. 1 are equally applicable here, and it is still not necessary to install any additional program code at the CMS server 2.

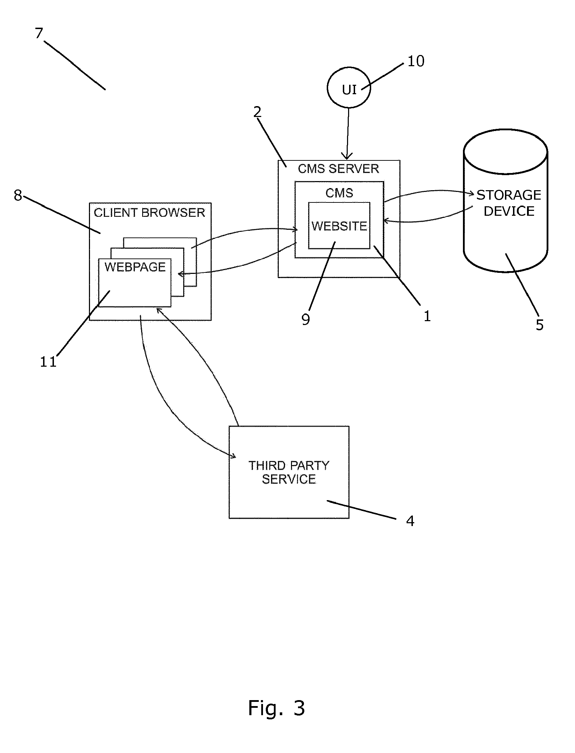

Fig. 3 is a block diagram illustrating a system 7 for managing a website, using a method according to an embodiment of the invention. The system 7 comprises a client browser 8 residing on a client device, a content management (CMS) server 2, and a storage device 5. The storage device 5 has objects, which have been configured in the manner described above, stored therein. The client browser 8 is adapted to allow a visitor to gain access to content of various websites, via a network.

The CMS server 2 has a content management system (CMS) 1 and a website 9 residing thereon. The CMS 1 allows a website manager or editor to create and edit content of the website 9, via a user interface 10. The website 9 contains content which is available to visitors via a public or private network, e.g. the Internet or an intranet.

A communication channel exists between the CMS server 2 and the storage device 5, allowing the CMS 1 to retrieve configured objects from the storage device 5. Thereby the CMS 1 is capable of injecting appropriate configured objects at appropriate positions of appropriate webpages of the website 9, when a visitor requests one or more webpages of the website 9.

A visitor may accesses the website 9, via the client browser 8, and request one or more webpages of the website 9. Upon this request, the CMS 1 dynamically generates the webpage(s) requested by the visitor. The dynamic generation of the webpage(s) includes that the CMS 1 injects one or more configured objects into the webpage(s), the object(s) being retrieved from the storage device 5. Accordingly, the dynamically generated webpage(s) include relevant and appropriate objects at appropriate positions of the dynamically generated webpage(s).

Next, the dynamically generated webpage(s) 11 is/are supplied to the client browser 8, and is/are thereby made available to the visitor.

Upon receipt of the webpage(s) 11, the client browser 2 contacts a third party service 4, prompted by one or more objects which were injected into the webpage(s) 11 by the CMS 1. The third party service 4 may, e.g., be in the form of a third party website, a third party web service, a third party server, etc. The third party service 4 is operated by a third party, i.e. it is not operated by the owner of the website 9. However, the third party service 4 may very well operate on behalf of the owner of the website 9.

When the third party service 4 is contacted by the client browser 8, it performs functionality. This may, e.g., include monitoring the behaviour of the visitor during the visit to the website 9, generating a heat map, and/or gathering information regarding the visitor in other manners, e.g. by recognising an ID of the client browser 8. The obtained information regarding the visit and/or the visitor may subsequently form the basis of statistical analysis, which can be provided to the owner of the website 9.

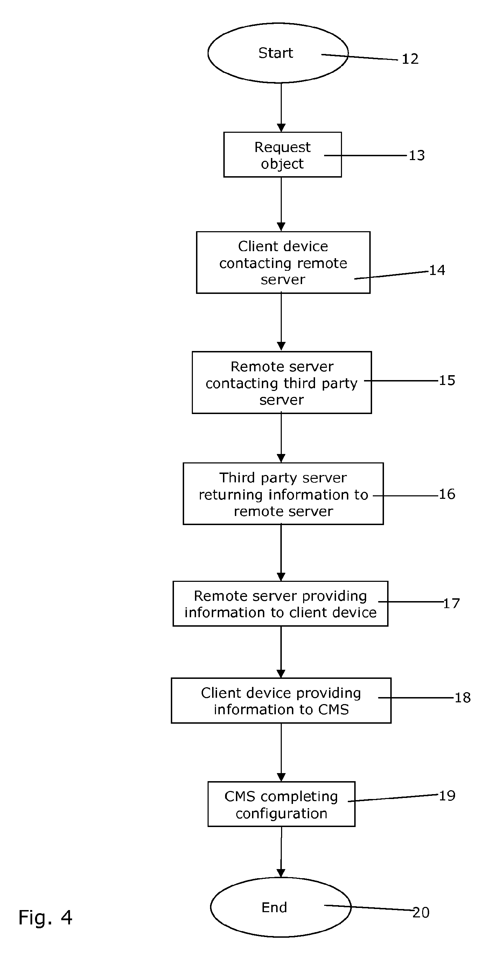

Fig. 4 is a flow diagram illustrating a method according to an embodiment of the invention. The process is started at step 12. At step 13 a website manager accesses a CMS, via a client device, and requests an object to be injected into a website. In response to this, the CMS causes the client device to contact a remote server, at step 14. The remote server may, e.g., be the app centre server illustrated in Fig. 1, or the third party server 4 illustrated in Fig. 2.

Upon being contacted, the remote server starts a process of obtaining information required in order to configure the object.

At step 15 the remote server contacts a third party server, e.g. a server belonging to a service provider who is supposed to provide a service which is related to the requested object. In response to being contacted, the third party server returns relevant information to the remote server, at step 16. It should be noted, that in the case that the remote server is a third party server, steps 15 and 16 could be ommitted.

When the remote server has obtained the required information, it provides the obtained information to the client device, at step 17, and the client device provides the information to the CMS at step 18. Then the CMS completes the configuration of the object, at step 19, based on the received information. To this end the CMS may request further information from the website manager, and the website manager may provide the requested information, via the client device, as described above with reference to Fig. 1. Finally, the process is ended at step 20. It should be noted that steps 17 and 18 could be replaced by the step of the remote server providing the information directly to the CMS.

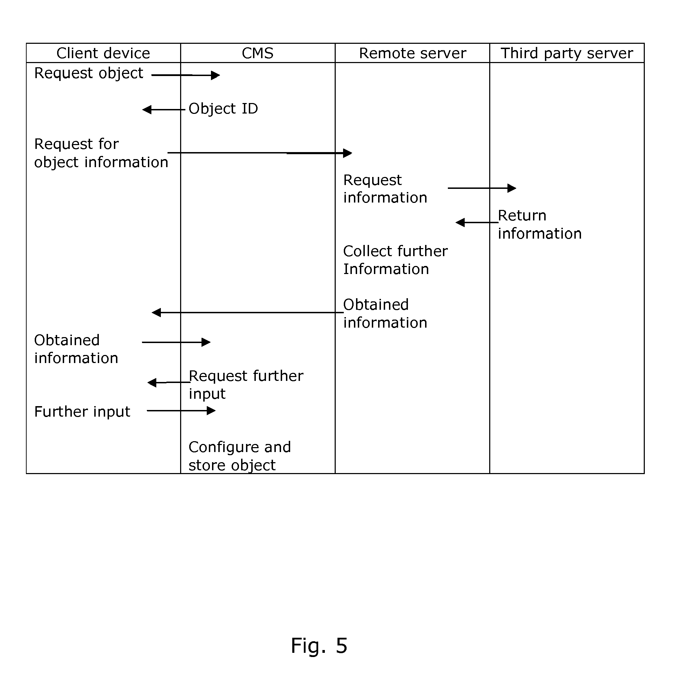

Fig. 5 is a diagram illustrating flow of information during performance of a method according to an embodiment of the invention. Initially, a client device requests an object to be injected into a webpage, at a CMS. In response, the CMS returns an object ID to the client device, and causes the client device to contact a remote server.

The client device then requests the remote server to obtain information required in order to configure the requested object. The client device further forwards the object ID to the remote server.

The remote server then initiates the process of obtaining the required information. To this end the remote server contacts a third party server, requesting at least part of the required information from the third party server. In response, the third party server returns the requested information to the remote server. The remote server obtains further information, e.g. information which is readily available at the remote server.

When the remote server has obtained the part of the information required in order to configure the object, which the remote server is capable of obtaining, it provides the obtained information to the client device. The information may advantageously be provided in the form of configured variables as a collection of variables, along with the object ID.

The client device then forwards the received information to the CMS. The CMS then contacts the client device in order to request further input from the website manager, and the website manager provides the requested input to the CMS, via the client device. Finally, the CMS configures the object, based on the information obtained by the remote server, and on the further input provided by the website manager, and the configured object is stored at a storage device.

## Claims

1. A method for configuring an object to be injected into one or more webpages of a website, said one or more objects each comprising one or more configurable variables, the method comprising the steps of:
- a website manager accessing a content management system (CMS), said CMS residing on a CMS server, via a client device,
- the website manager requesting an object to be injected into one or more webpages of the website, thereby initiating a configuring process,
- in response to said request, the CMS causing the client device to contact a remote server,
- the remote server obtaining information, regarding the configurable variable(s), required in order to configure the object,
- the remote server providing said information to the CMS, and
- configuring the object, using the obtained information, and storing the object and/or the configured variable(s) at a storage device which is accessible to the CMS.

2. A method according to claim 1, wherein the step of configuring the object is performed at the CMS.

3. A method according to claim 1 or 2, wherein the step of configuring the object is performed at the remote server.

4. A method according to any of the preceding claims, wherein the remote server is a service provider arranged to manage objects to be injected into webpages on behalf of a website manager.

5. A method according to claim 4, further comprising the step of the remote server contacting a third party service in order to obtain at least part of the information required in order to configure the object.

6. A method according to claim 4 or 5, further comprising the step of the remote server causing the client device to contact a third party service in order to allow the client device to obtain at least part of the information required in order to configure the object directly from the third party service.

7. A method according to any of the preceding claims, further comprising the steps of:
- the CMS requesting further information required in order to configure the object from the website manager, and
- the website manager providing said further information to the CMS, via the client device.

8. A method according to any of the preceding claims, further comprising the step of the CMS dynamically generating a webpage, including injecting the object into the webpage upon request for said webpage by a visitor visiting the website.

9. A method according to claim 8, wherein the object contains instructions to a browser to contact a third party web service, and wherein the method further comprises the step of the browser of the visitor contacting said third party web service in response to receiving the dynamically generated webpage.

10. A method according to claim 9, further comprising the step of the third party web service performing functionality in response to being contacted by the browser of the visitor.

11. A method according to any of the preceding claims, wherein the step of the remote server obtaining information is performed by means of a wizard or steps of a wizard.

12. A method according to any of the preceding claims, wherein the step of the remote server providing information to the CMS comprises the steps of:
- the remote server providing said information to the client device, and
- the client device subsequently providing said information to the CMS.

13. A method according to claim 12, further comprising the step of the remote server redirecting the client device to the CMS, when the remote server has obtained the information, and wherein the step of the client device providing said information to the CMS is performed in response to said redirection.

14. A method according to any of the preceding claims, further comprising the step of the CMS providing information to the client device or to the remote server, in response to the website manager requesting an object, and wherein the step of the remote server obtaining information is performed on the basis of the information provided by the CMS.

15. A tool for configuring one or more objects to be injected into one or more webpages of a website, said one or more objects each comprising one or more configurable variables, the tool comprising:
- a content management system (CMS) residing on a CMS server,
- a user interface allowing a website manager to access the CMS, via a client device, in order to request an object to be injected into one or more webpages of the website, and in order to allow the client device to provide information to the CMS,
- a communication channel allowing the client device to communicate with a remote server in order to obtain information regarding the configurable variable(s), said information being required in order to configure the object, thereby allowing the object to be configured, using the obtained information, and
- a storage device which is accessible to the CMS, for storing objects and/or configured variable(s).

16. A tool according to claim 15, wherein the remote server is a service provider arranged to manage objects to be injected into webpages on behalf of a website manager.

17. A tool according to claim 15, wherein the remote server is a third party web service.
